# EUROPEAN PATENT APPLICATION

(11) **EP 1 377 063 A1**
(43) Date of publication of application: **02.01.2004**
(21) Application number: 02090219.3
(22) Date of filing: 15.06.2002
(51) Int. Cl.: H04N 7/24

(54) **Improved link resolving mechanism**

(71) Applicant: DEUTSCHE THOMSON-BRANDT GMBH, 78048 Villingen-Schwenningen (DE)
(72) Inventor: Adolph, Dirk, 30952 Ronnenberg (DE); Kochale, Axel, 31832 Springe (DE); Kubsch, Stefan, 31559 Hohnhorst (DE); Li, Hui, 30419 Hannover (DE); Peters, Hartmut, 30890 Barsinghausen (DE)
(74) Representative: Hartnack, Wolfgang, Dipl.-Ing.

(57) **Abstract**

According to the invention every asset (metadata or essence) is labelled with a unique identifier and with the last action applied to this asset.
A problem to be solved by the invention is to find a method for storing a recording, which includes storing the essence (A/V) of a recording on one storage medium and the metadata belonging to this recording on another storage medium.

## Description

The invention relates to a method and an apparatus for improving the consistency of data and of metadata and their links following an editing process of the data or metadata.

### Background

Broadcast systems like DVB, MHP, TV-Anytime, etc. provide a large amount of additional information, which is being distributed together with audio and video services. These added-value information services will even increase in future.
A user will have the ability of storing more and more data on storage media with increasing capacity. Furthermore, such data can be copied multiple times to other devices or storage media, without any loss of quality due to their digital format. The merging of broadcast-independent added-value service information, e.g. an Internet Television Guide, with recorded broadcast signals, and their later editing, will become increasingly common.

US-A-5 870 753 describes a method for using the UUID (universal unique identifier), which is carried and persistently stored in an object reference data structure. But the history of the object and the information to which object a UUID belongs are not kept in memory.
In US-A-6 163 811 the versioning control information is kept using a UUID that distinguishes between source files of the different vendors.

### Invention

In both prior art cases no tracking or editing is possible.

But all the technical possibilities listed above bear a huge technical problem: the problem of consistency. Added value-data (metadata) usually include a link that is pointing to the content they are related to (e.g. the summary of a movie will have a link to the start of the video at the time when it will be requested). This link, however, must be kept consistent even after editing processes are executed by a user. Editing means: copying, cutting, new arrangement, etc. of A/V streams (audio and/or video) and of metadata.

A problem to be solved by the invention concerns consistent storage, links and interaction between metadata and essence data that are still useful following editing of the metadata or essence data.
Every asset (metadata or essence) gets a unique identifier, e.g. a UUID, and information about the last action applied to an asset.
This includes storage of the essence (A/V) of a recording on one storage medium, e.g. on a recordable disc, and of the metadata belonging to this recording on another storage medium.

This problem is solved by the method disclosed in claim 1 and by the apparatus disclosed in claim 6.

If a recording is being edited, the metadata may become scattered on several media. Editing can include:
a) adding additional metadata links, which point to the A/V stream, or
b) copying parts of the data (essence or metadata) onto different storage media or discs.

In order to keep the link-resolving process working properly, it is necessary to adapt the metadata links correctly. The adaptation ensures that the A/V data can be played back using the metadata link, even if the link has been previously moved. However, the adaptation of metadata links is very complicated and may even fail in case of distributed media storage, i.e. if A/V data have been moved to another storage medium, or deleted.

The invention encompasses three elements, which all work together:

### 1st element:

The identifier (e.g. UUID, GUID (global unique identifier), etc.) identifies every essence and metadata. The identifier can be generated autarkical by every device and is unique for e.g. every 100nsec until e.g. the year 3400 A.D.

### 2nd element:

The XML scheme provides an identifier (e.g. UUID) for every asset, which is being stored on the device. The identifier is stored within the LogEntry structure. The LogEntry structure (which is e.g. a first list or a first data field or a first table) encompasses the identifier and an action item. Furthermore, the XML scheme includes a LogEntryHistory structure (e.g. a further list or a further data field or a further table, or a corresponding extension of the first list or data field or table) which will contain obsolete LogEntry elements.

### 3rd element:

The third element is a decision table or list or data field that provides a control mechanism for the XML scheme elements and all assets, which were filled correctly into the XML scheme together with their content according to the processes executed on it.

These three elements are put together in order to support the decision process. The decision process is for instance necessary for a metadata link pointing to an essence and for making it possible for a user to get access to the essence linked to this metadata.

Every asset (which can be either metadata or essence) is labelled with an identifier (e.g. a UUID) and with the last action applied to this asset. Both items of information are stored within a list or data field denoted LogEntry, which is available for all assets.
When an A/V stream is being recorded it will receive an identifier, and the corresponding LogEntry action is 'created'.
In case some other time a copy operation for this A/V stream is generated and the copy process is physically duplicating the stream, a new UUID will also be created as well as a new LogEntry action 'copy' for the LogEntry of the copied item. The previous LogEntry elements of the copy that are now being redundant, will be added to the LogEntryHistory element. Every additional editing process will do the same, so that the LogEntryHistory will carry all LogEntries that ever have been assigned to this asset.

When a resolving process is searching for an asset, it will be able to identify this asset by its identifier within the LogEntry due to the fact that the LogEntry is unique.

The big advantage of the invention is, that the editing process is much easier, because it is no longer necessary to handle all the changes within all links referring to the assets that are being edited. Changing all links will even become obsolete if the referencing elements are located on a storage medium that is not accessible for the update processing in the devise.

The consistency of this invention is provided by a decision table, list or data field, which is easy to implement, and by the resolving process being able to match assets by examining the LogEntryHistory entries. When using this inventive decision table for the editing process, the resolver is able to find even assets that would have been lost if using the conventional editing process.

In principle, the inventive method is suited for making a consistency decision, wherein metadata are checked automatically or electronically for consistency, including the steps:
- requesting search for a link for an identifier in a LogEntry, e.g. a UUID or GUID;
- analysing the LogEntry whether an identifier was found;
- in case no LogEntry was found:
   - examining a LogEntryHistory for a matching identifier;
   - analysing the LogEntryHistory for an identifier found;
   - determining whether more than one matching identifier is available;
   - if this is true, consistency checking for the best matching identifier based on the action item;
- returning the location of the matching identifier.

In principle, the inventive apparatus matches assets by automatically or electronically checking said assets or part of said assets for consistency, the apparatus including:
- means for requesting the search for a link for an identifier in a LogEntry, e.g. a UUID or GUID;
- means for analysing the LogEntry whether an identifier was found, and in case no LogEntry was found for providing this information to:
   - examining means for examining a LogEntryHistory for a matching identifier;
   - means for analysing the LogEntryHistory for an identifier found;
   - means for determining whether more than one matching identifier is available;
   - means for checking, if more than one identifier was found, the consistency of the identifiers found and for selecting the best matching identifier based on the action item;
- an identifier-location provider to which the location of the matching or best matching, respectively, identifier is returned.

Advantageous additional embodiments of the invention are disclosed in the respective dependent claims.

### Drawings

Exemplary embodiments of the invention are described with reference to the accompanying drawings, which show in:
- Fig. 1: LogEntry and LogEntryHistory structures of an asset;
- Fig. 2: Flow chart according to the invention;
- Fig. 3: Structure of an apparatus according to the invention;
- Fig. 4: Basic asset processing request flow chart.

### Exemplary embodiments

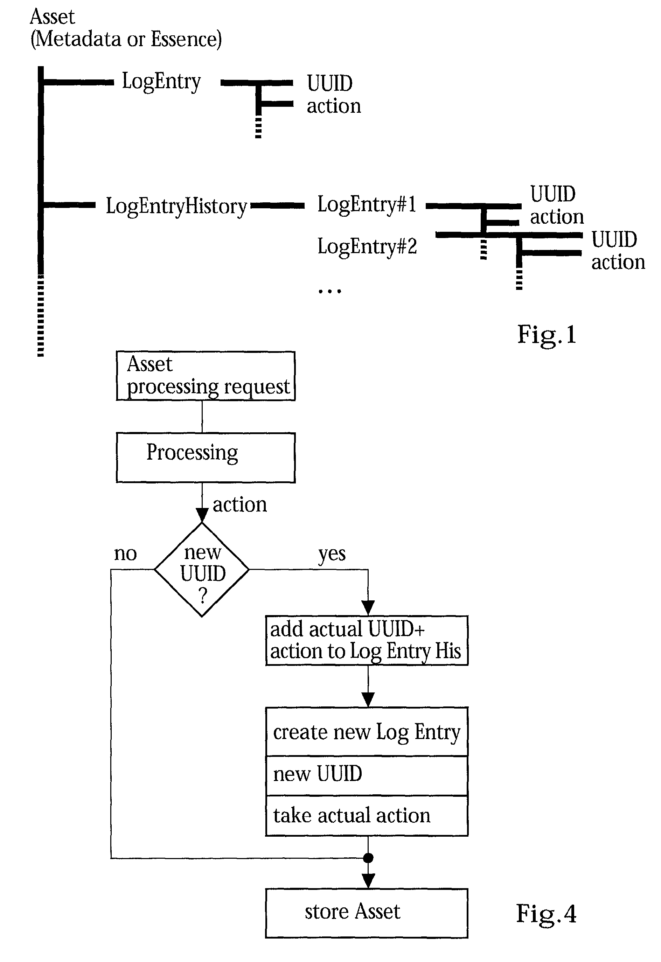

Fig. 1 shows the structure of a LogEntry characteristic of an asset. The LogEntry contains the recent identifier (e.g. a UUID) and the corresponding action entries of an asset. As a kind of a memory, the LogEntryHistory contains all previous identifiers and all former action items of this asset.

The editing process steps for a recording, and the process of storing a recording, are depicted in Fig. 4. Each time an asset processing is requested and a corresponding processing started, this asset will get a new UUID that is entered into a newly created LogEntry, or is overwritten in the current LogEntry. However, before the current UUID and action is deleted or overwritten in the LogEntry, the current UUID and action is appended to the LogEntryHistory.
There may be some special actions where no new UUID is necessary, e.g. in case a protection flag is changed.
The action entry describes the actually performed manipulation, e.g. 'create new', etc.. The LogEntryHistory includes all LogEntry elements that were previously attached to an asset during its life time.
After the new UUID and LogEntry have been created the desired actual action for the asset is executed and the asset stored.

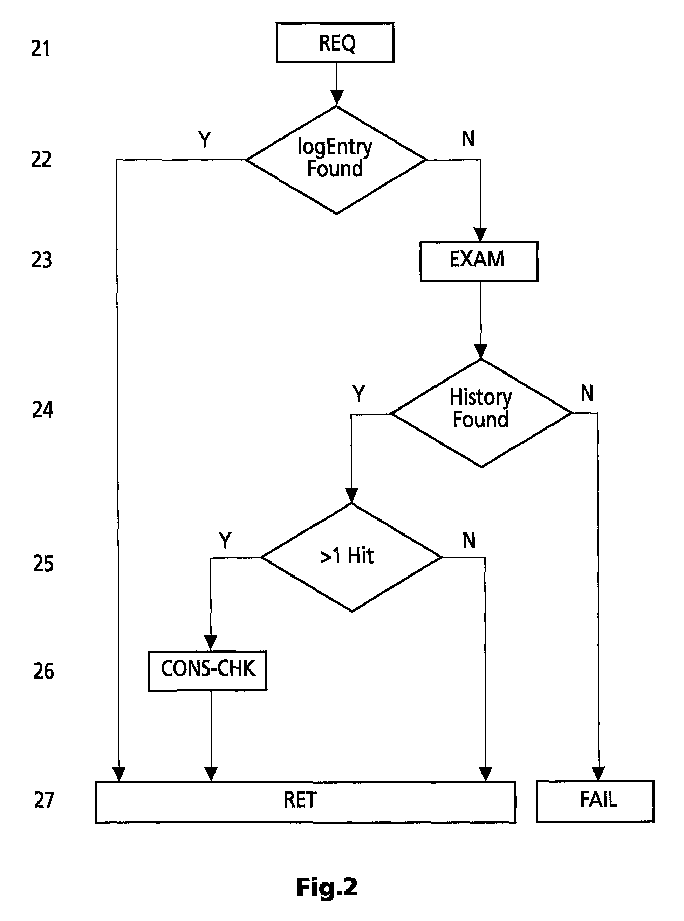

The flow chart of Fig. 2 demonstrates the inventive resolving process. In a first step, the resolving process searches 21 for an identifier (e.g. a UUID) in all available LogEntries. If the resolving process will find 22 a LogEntry it will output 27 the matching link in return. If the resolving process cannot find the desired identifier within the first step, the resolving process will continue with a second step.
In the second step the process searches 23 for the identifier within all available LogEntryHistory entries.
If no identifier can be found 24 the process has failed (FAIL), which result can be signalled to the user.
If a single identifier only is found 24, 25, the location of this identifier will be returned and the process will be terminated 27.
In case more than one hit (matching identifier) is found 24, 25, the resulting action entry supports making a decision in a consistency check 26 enabling the process to determine whether the asset is still valid, and for returning 27 the best matching link based on the action item.

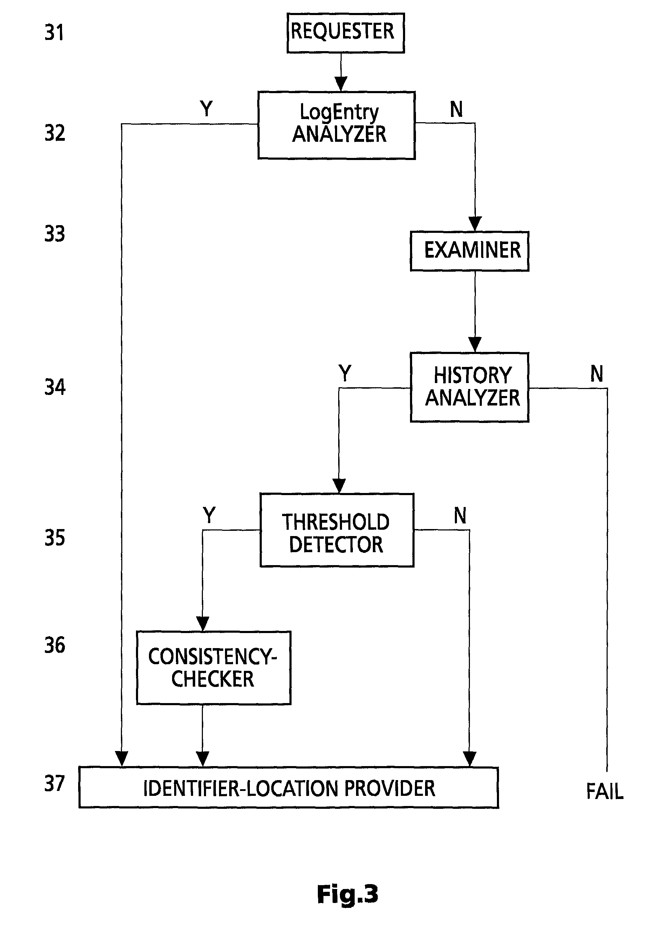

In Fig. 3 the apparatus searches in a requester 31 for the identifier (e.g. a UUID) in all available LogEntries. If the LogEntry analyser 32 finds a LogEntry, it will output in return the matching link to an identifier-location provider stage 37. If LogEntry analyser 32 can not find the desired identifier within the LogEntry, an examining means 33 will search for the identifier within all available LogEntryHistory entries.
If a history analyser 34 that is associated with said examining means 33 determines that a single or multiple identifiers have been found, it will return the location of this identifier or theses identifiers to a threshold detector 35. If the history analyser 34 determines that no identifier was found it outputs a fail signal (FAIL), which can be signalled to a user.
The threshold detector 35 determines whether more than one identifier was found. If a single identifier only was found, the location of this identifier is returned to the identifier-location provider stage 37. In case multiple matching identifiers were found, the threshold detector provides the corresponding information to a consistency checker 36 in order to support making a decision therein, whether the asset is still valid. If this is true, the consistency checker 36 return the best matching link to the identifier-location provider stage 37.

The invention can be used when recording audio, video and/or other data, which includes storing the essence (A/V) of a recording on one medium (e.g. a recordable disc), and of the metadata belonging to this recording on another medium.

The invention can also be used in editing processes by the user. If the action elements show non-disruptive edit actions like e.g. 'copy', the asset was not changed and can be used. In case the action elements show disruptive actions, the resolving process can decide by means of the targeted part of the A/V stream if it is still valid.

### Example:

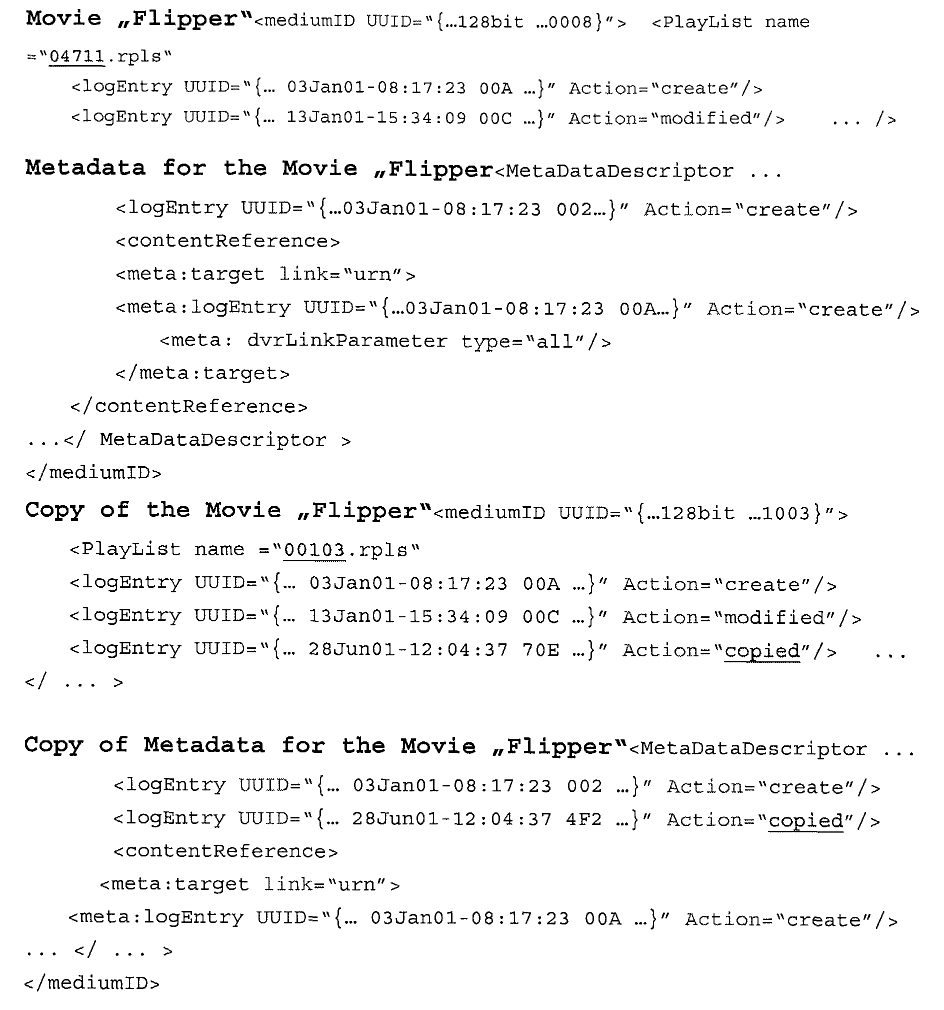

Editing operations can be: creating, copying, cutting, appending, new arrangement, etc. of A/V streams and of metadata. If the action elements show edit actions like "copied", the asset will not be changed and will be used. Or, if the action element shows actions like "cut tail", "cut head", "merged" etc., the resolving process can decide by means of the targeted part of the A/V stream if it is still valid.

## Claims

1. Method for making a consistency decision, wherein metadata are checked automatically or electronically for consistency, **characterised by** the steps:
- requesting (21) search for a link for an identifier in a LogEntry, e.g. a UUID or GUID;
- analysing (22) the LogEntry whether an identifier was found;
- in case no LogEntry was found:
- examining (23) a LogEntryHistory for a matching identifier;
- analysing (24) the LogEntryHistory for an identifier found;
- determining (25) whether more than one matching identifier is available;
- if this is true, consistency checking (26) for the best matching identifier based on the action item;
- returning (27) the location of the matching identifier.

2. Method according to claim 1, wherein the action items include, but are not limited to:
- creating an asset;
- copying an asset;
- cutting the head and/or tail of an asset;
- appending an asset.

3. Method according to claim 1 or 2, wherein the identifiers and the corresponding action items are stored within the structure of the LogEntry.

4. Method according to claim 1, 2 or 3, wherein a LogEntryHistory encompasses obsolete LogEntry elements in case a copy of an A/V stream is being generated.

5. Method according to one of claims 1 to 4, including using a decision table that provides a control mechanism for the identifier, the LogEntry and the LogEntryHistory, wherein the decision table contains all the processes executed on the assets.

6. Apparatus for matching assets by automatically or electronically checking said assets or part of said assets for consistency, including:
- means (31) for requesting the search for a link for an identifier in a LogEntry, e.g. a UUID or GUID;
- means (32) for analysing the LogEntry whether an identifier was found, and in case no LogEntry was found for providing this information to:
- examining means (33) for examining a LogEntryHistory for a matching identifier;
- means (34) for analysing the LogEntryHistory for an identifier found;
- means (35) for determining whether more than one matching identifier is available;
- means (36) for checking, if more than one identifier was found, the consistency of the identifiers found and for selecting the best matching identifier based on the action item;
- an identifier-location provider (37) to which the location of the matching or best matching, respectively, identifier is returned.

7. Apparatus according to claim 6, wherein the action items include, but are not limited to:
- creating an asset;
- copying an asset;
- cutting the head and/or tail of an asset;
- appending an asset.

8. Apparatus according to claim 6 or 7, wherein the identifiers and the corresponding action items are stored within the structure of the LogEntry.

9. Apparatus according to claim 6, 7 or 8, wherein a LogEntryHistory encompasses obsolete LogEntry elements in case a copy of an A/V stream is being generated.

10. Apparatus according to one of claims 6 to 9, including a decision table memory that provides a control mechanism for the identifier, the LogEntry and the LogEntryHistory, wherein the decision table contains all the processes executed on the assets.
